# FASCICULE DE BREVET EUROPEEN

(11) **EP 2 480 091 B1**
(45) Date de publication et mention de la délivrance du brevet: **21.08.2013**
(21) Numéro de dépôt: 10752873.9
(22) Date de dépôt: 27.07.2010
(51) Int. Cl.: A21C 1/02, A21C 1/14, G01N 29/02

(54) **PROCÉDÉ DE PÉTRISSAGE D'UNE PÂTE NOTAMMENT POUR PRÉPARATION BOULANGÈRE, ET DISPOSITIF DE MISE EN OEUVRE**
VERFAHREN ZUM KNETEN VON TEIG, IM BESONDEREN ZUR HERSTELLUNG VON BACKWAREN UND VORRICHTUNG ZUR UMSETZUNG DES VERFAHRENS
METHOD FOR KNEADING DOUGH, IN PARTICULAR FOR BAKERY PREPARATION, AND DEVICE FOR IMPLEMENTING SAME

(30) Priorité: 23.09.2009 FR 0904540
(43) Date de publication de la demande: 01.08.2012
(73) Titulaire: VMI, 85600 Montaigu (FR)
(72) Inventeur: CHEIO DE OLIVEIRA, José, F-85600 St Hilaire de Loulay (FR); CHAILLOU, Emmanuel, F-85800 Le Fenouiller (FR); COPPENOLLE, Philippe, F-85600 Montaigu (FR); NONGAILLARD, Bertrand, F-59135 Wallers (FR); NASSAR, Georges, F-59590 Praismes (FR)
(74) Mandataire: Gaillarde, Frédéric F. Ch.
(86) Numéro de dépôt international: PCT/FR2010/051584
(87) Numéro de publication internationale: WO 2011/036359

(56) Documents cités:
- WO-A1-2005/044860
- US-A1- 2005 129 822
- US-A1- 2006 207 329
- "DIOSNA CONSISTENCY CONTROL SYSTEM. ÖAUTOMATED DOUGH MIXING PROCESS CONTROL", CONFECTIONERY PRODUCTION, SPECIALISED PUBLICATIONS LTD., SURREY, GB, vol. 61, no. 3, 1 mars 1995 (1995-03-01), page 210, XP000512234, ISSN: 0010-5473

## Description

La présente invention se rapporte à un procédé de suivi du pétrissage d'une pâte notamment pour une préparation boulangère.

Une pâte pour une préparation boulangère telle que le pain est en général obtenue en mélangeant de la farine boulangère, de l'eau et du sel, et en pétrissant ce mélange pendant un certain temps.

Le pétrissage a pour effet de permettre de relier entre elles les protéines (gluten) qui se trouvent dans la farine, et ainsi d'enfermer les bulles de gaz émanant de la fermentation de cette farine sous l'action de l'eau, ces bulles permettant in fine de conférer à la mie sa consistance aérée.

La durée de pétrissage est une grandeur critique : une durée trop courte peut être insuffisante pour établir les liaisons souhaitées entre les protéines, et une durée trop longue peut conduire à la destruction de ces liaisons.

Traditionnellement, c'est le savoir-faire du boulanger qui permet de déterminer la durée du pétrissage, en fonction du type de préparation boulangère concernée : cette détermination s'effectue à partir de l'aspect de la pâte, de sa consistance, etc.

Le document US-A-2006/207329 divulgue un procédé selon le préambule de la revendication 1 et un dispositif selon le préambule de la revendication 4.

La présente invention a notamment pour but de fournir des moyens permettant d'assurer une bonne répétabilité de la qualité de la pâte obtenue à l'issue d'une opération de pétrissage, pour chaque type de préparation boulangère : une telle répétabilité est en effet essentielle notamment dans un contexte de fabrication industrielle.

On atteint ce but de l'invention avec un procédé de pétrissage d'une pâte notamment pour préparation boulangère, remarquable en ce qu'on capte les signaux acoustiques basse-fréquence provoqués par le pétrissage de la pâte, en ce qu'on traite ces signaux de manière à obtenir une donnée dont l'évolution temporelle est représentative de l'avancement du pétrissage, et en ce qu'on modifie les conditions de pétrissage ou bien la composition de la pâte lorsque cette donnée répond à des critères prédéterminés.

De manière surprenante en effet, on a pu se rendre compte que les signaux acoustiques basse fréquence engendrés par le pétrissage de la pâte étaient fortement représentatifs du stade de pétrissage atteint, et qu'il était par conséquent possible d'utiliser ces signaux pour juger de l'opportunité et le la manière d'intervenir sur le pétrissage en cours.

Ainsi, à partir de ces signaux, on peut décider de modifier les conditions de pétrissage : arrêt pur et simple du pétrissage, ou bien modification de la vitesse de pétrissage, par exemple ; on peut aussi décider de modifier la composition de la pâte : ajout d'un des ingrédients (farine, sel, eau), par exemple.

Suivant d'autres caractéristiques optionnelles du procédé selon l'invention :
- on réalise ledit traitement en déterminant une durée d'acquisition dudit signal, et en choisissant, pour ladite donnée, le maximum atteint par ce signal pendant cette durée : cette manière de faire permet d'obtenir une donnée affranchie du bruit du signal ;
- on choisit environ deux secondes pour ladite durée d'acquisition : il s'est avéré en pratique que cette durée d'acquisition était bien appropriée au pétrissage d'une pâte.

La présente invention se rapporte également à un dispositif de pétrissage d'une pâte adapté pour mettre en oeuvre le procédé susmentionné, remarquable en ce qu'il comprend au moins un capteur acoustique basse fréquence agencé de manière à pouvoir capter les signaux provoqués par le pétrissage de la pâte, des moyens de traitement du signal émis par ledit capteur adaptés pour engendrer notamment ladite donnée, et une interface homme-machine permettant de restituer cette donnée à un opérateur.

Ainsi, en suivant l'évolution de la donnée représentative de l'état d'avancement du pétrissage de la pâte, un opérateur peut prendre les décisions appropriées concernant le pétrissage : arrêt, modification de la vitesse de pétrissage, modification de la composition de la pâte.

Suivant d'autres caractéristiques optionnelles de la présente invention :
- ledit dispositif est du type à pétrissage par lots : ce type de dispositif couvre notamment tous les pétrins et batteurs à cuve ;
- ledit dispositif comprend une cuve, au moins un outil de mélange s'étendant dans ladite cuve et au moins un pivot de cuve, ledit capteur étant fixé sur ledit pivot de cuve ;
- ledit dispositif est du type à pétrissage en continu : ces machines, connues en soi, permettent de produire de la pâte pétrie de manière continue, au fur et à mesure de l'admission des ingrédients ;
- ledit dispositif comprend une pluralité de capteurs acoustiques basse fréquence répartis de manière appropriée dans la zone de pétrissage.

D'autres caractéristiques et avantages de la présente invention apparaîtront à la lumière de la description qui va suivre et à l'examen des figures ci-annexées dans lesquelles :
- la figure 1 est une vue en perspective d'un pétrin à cuve selon l'invention,
- la figure 2 est une vue de détail de la zone I de la figure 1,
- la figure 3 représente une série de signaux électriques émis par un capteur acoustique faisant partie du pétrin des figures 1 et 2, et
- la figure 4 représente une courbe issue du traitement des signaux représentés à la figure 3.

Sur l'ensemble de ces figures, des références identiques ou analogues représentent des organes ou ensemble d'organes identiques ou analogues.

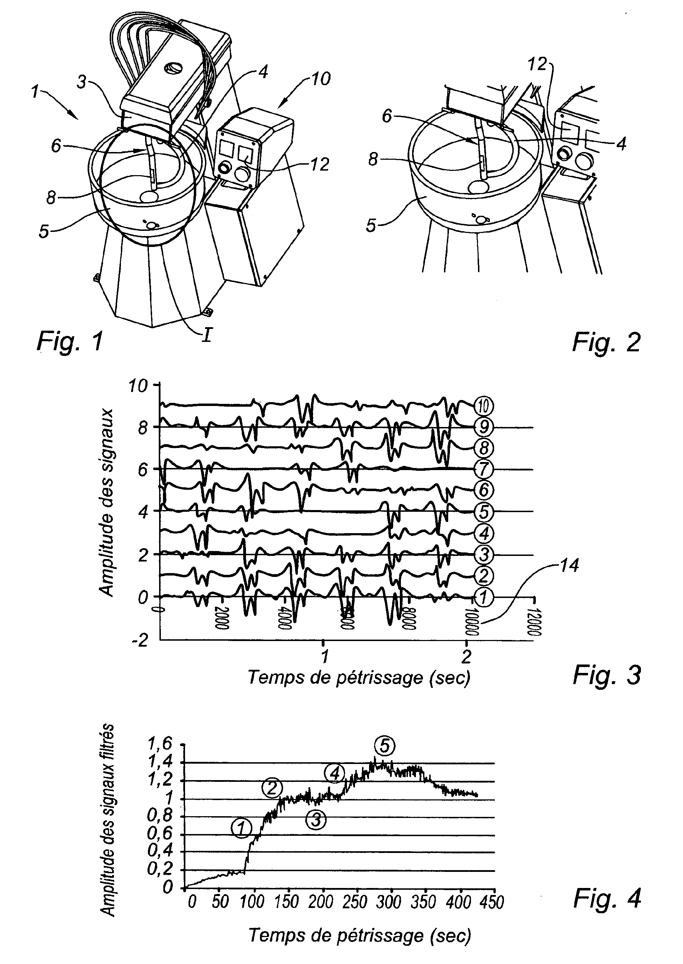

En se reportant à la figure 1, on peut voir un pétrin 1 adapté notamment au pétrissage d'une pâte pour préparation boulangère (pain, pâtisserie,...).

Un tel pétrin comporte notamment une tête de mélange 3 supportant au moins un outil de mélange 4, plongeant à l'intérieur d'une cuve 5 destinée à recevoir la pâte à pétrir.

Dans l'exemple représenté, le pétrin comporte un unique outil de mélange 4 torsadé dit couramment « en queue de cochon ».

Le pétrin comporte également un axe sensiblement vertical fixe 6, appelé pivot de cuve.

En fonctionnement, l'outil de mélange 4 est animé d'un mouvement de rotation autour de son propre axe, qui a pour effet de faire pivoter lentement la cuve 5 par l'intermédiaire de la pâte battue.

Le pivot de cuve 6 comporte, dans sa partie située dans le fond de la cuve 5, un capteur acoustique basse fréquence 8.

Un tel capteur peut être par exemple un capteur piézo-électrique en céramique de type PZ26, fourni par la société FERROPERM (http://www.ferroperm-piezo.com).

Un tel capteur permet de convertir une contrainte mécanique, et dans l'espèce une onde acoustique basse fréquence, en un signal électrique.

Comme on peut le voir particulièrement sur la figure 2, le capteur acoustique 8, dont les dimensions peuvent être variables, peut être fixé sur le pivot de cuve 6 par collage.

Un boîtier électronique 10 permet de commander le fonctionnement du pétrin 1, et comporte à cet effet, une interface homme-machine 12, permettant à un opérateur d'une part, de donner des consignes de fonctionnement au pétrin et d'autre part, d'avoir un retour d'information sur le fonctionnement de ce pétrin.

Plus précisément, le boîtier électronique 10 comporte, dans le cas de la présente invention, une carte d'acquisition électronique, reliée d'une part au capteur acoustique 8, et d'autre part à l'interface homme-machine 12.

Les fonctionnalités de cette carte d'acquisition électronique vont être expliquées dans ce qui suit.

On place à l'intérieur de la cuve 5 le mélange à pétrir, comprenant typiquement de la farine boulangère, de l'eau ainsi que du sel, ce dernier étant ajouté pendant le pétrissage.

En agissant sur l'interface homme-machine 12, l'opérateur met en route le pétrin, ce qui a pour effet de faire tourner l'outil de mélange 4 sur lui-même, entraînant le pétrissage de la pâte.

Ce pétrissage provoque des vibrations acoustiques large bande, qui sont reçues par le capteur 8 qui les transforme en signaux électriques.

En se reportant à la figure 3, on peut voir ces signaux électriques sur un graphique dont l'abscisse représente le temps de pétrissage en secondes, et dont l'ordonnée représente l'amplitude des signaux électriques, elle-même proportionnelle à l'amplitude des ondes acoustiques reçues par le capteur 8.

Les différentes courbes 1 à 10 représentent ces signaux pour 10 séquences d'acquisition successives, chaque séquence d'acquisition durant environ deux secondes, comme cela est visible sur l'axe des ordonnées.

Les nombres 14 indiquent le nombre de points de mesure effectués dans chaque séquence d'acquisition.

Comme on peut le voir sur le graphique de cette figure 3, l'amplitude des signaux électriques, et donc des ondes acoustiques, augmente assez régulièrement à partir de la phase initiale du pétrissage (courbe 1).

Par un moyen de traitement du signal approprié, incorporé à la carte d'acquisition électronique située à l'intérieur du boîtier 10, on extrait de chaque courbe 1 à 10 sa valeur maximale, permettant de reporter sur le graphique visible à la figure 4, l'évolution d'une valeur indicative de l'intensité des ondes acoustiques basse fréquence en fonction du temps.

Bien entendu, on peut choisir de lisser la courbe visible à la figure 4, de manière à la rendre plus lisible, sachant que cette courbe s'affiche pour l'opérateur sur l'interface homme-machine 12.

Comme on peut le voir à la figure 4, cette courbe comporte différentes parties : la partie 1 correspond à la prise de force de la pâte, c'est-à-dire à une augmentation de son élasticité, la partie 2 correspond à un palier avant l'ajout de sel dans la pâte, la partie 3 correspond à un affaissement de l'élasticité de la pâte après l'ajout du sel, la partie 4 correspond à une nouvelle prise de force après l'ajout du sel, et la partie 5 correspond au pic de sur-pétrissage.

Dans la partie 5, la liaison entre les protéines de la farine est maximale, et permet d'emprisonner au mieux les émanations de gaz issues de la fermentation de la farine.

Comme on peut donc le comprendre à la lumière de ce qui précède, l'opérateur lisant la courbe de la figure 4 sur l'interface homme-machine 12 peut savoir exactement dans quelle phase de pétrissage il se trouve, et ainsi prendre les décisions appropriées : arrêt du pétrissage, augmentation ou ralentissement de la vitesse du pétrissage, modification de la composition de la pâte (notamment par ajout de sel par exemple), décision de sur-pétrir, c'est-à-dire d'aller au-delà du pic de sur-pétrissage 5 (ceci convient pour certains types de préparations boulangères), etc.

La présente invention fournit donc des moyens simples et fiables d'optimisation des opérations de pétrissage, et permet en particulier d'obtenir une excellente répétabilité pour une préparation boulangère donnée, ce qui est indispensable dans un contexte de fabrication industrielle.

Bien entendu, la présente invention n'est nullement limitée à l'exemple décrit et représenté.

C'est ainsi par exemple que l'on pourrait envisager une pluralité de capteurs disposés de manière appropriée sur un pétrin, un batteur ou tout autre système de pétrissage possédant une cuve.

C'est ainsi également que l'on pourrait appliquer la présente invention aux systèmes de pétrissage en continu, c'est-à-dire aux systèmes dans lesquels la pâte sort de manière continue au fur et à mesure de l'adjonction des ingrédients : dans ce type de machine, l'installation de plusieurs capteurs à l'intérieur de l'enceinte de pétrissage est envisageable.

## Revendications

1. Procédé de pétrissage d'une pâte notamment pour préparation boulangère, **caractérisé en ce qu'**on capte les signaux acoustiques basse-fréquence provoqués par le pétrissage de la pâte, **en ce qu'**on traite ces signaux de manière à obtenir une donnée dont l'évolution temporelle est représentative de l'avancement du pétrissage, et **en ce qu'**on modifie les conditions de pétrissage ou bien la composition de la pâte lorsque cette donnée répond à des critères prédéterminés.

2. Procédé selon la revendication 1, **caractérisé en ce qu'**on réalise ledit traitement en déterminant une durée d'acquisition dudit signal, et en choisissant, pour ladite donnée, le maximum atteint par ce signal pendant cette durée.

3. Procédé selon la revendication 2, **caractérisé en ce qu'**on choisit environ deux secondes pour ladite durée d'acquisition.

4. Dispositif (1) de pétrissage d'une pâte adapté pour mettre en oeuvre le procédé conforme à l'une quelconque des revendications 1 à 3, **caractérisé en ce qu'**il comprend au moins un capteur acoustique basse fréquence (8) agencé de manière à pouvoir capter les signaux provoqués par le pétrissage de la pâte, des moyens de traitement du signal émis par ledit capteur adaptés pour engendrer notamment ladite donnée, et une interface homme-machine (12) permettant de restituer cette donnée à un opérateur.

5. Dispositif (1) selon la revendication 4, **caractérisé en ce que** ledit dispositif est du type à pétrissage par lots.

6. Dispositif (1) selon la revendication 5, **caractérisé en ce que** ledit dispositif comprend une cuve (5), au moins un outil de mélange (4) s'étendant dans ladite cuve (5) et au moins un pivot de cuve (6), ledit capteur (8) étant fixé sur ledit pivot de cuve (6).

7. Dispositif selon la revendication 4, **caractérisé en ce que** qu'il est du type à pétrissage en continu.

8. Dispositif selon l'une quelconque des revendications 4 à 7, **caractérisé en ce qu'**il comprend une pluralité de capteurs acoustiques basse fréquence répartis de manière appropriée dans la zone de pétrissage.

## Patentansprüche

1. Verfahren zum Kneten eines Teigs, insbesondere für Backwarenzubereitung, **dadurch gekennzeichnet, dass** die akustischen Niederfrequenzsignale, die durch das Kneten des Teigs erzeugt werden, aufgefangen werden und dass diese Signale derart verarbeitet werden, dass man eine Angabe erhält, deren zeitliche Entwicklung für den Knetfortschritt repräsentativ ist, und dass die Knetbedingungen oder die Zusammensetzung des Teigs verändert werden, wenn diese Angabe vorbestimmten Kriterien entspricht.

2. Verfahren nach Anspruch 1, **dadurch gekennzeichnet, dass** die Verarbeitung durch Bestimmung einer Erfassungszeit des Signals durchgeführt wird und durch Auswahl des Maximums, das von diesem Signal während dieser Zeit erreicht wird, für diese Angabe.

3. Verfahren nach Anspruch 2, **dadurch gekennzeichnet, dass** zirka zwei Sekunden als Erfassungszeit ausgewählt werden.

4. Knetvorrichtung (1) eines Teigs, die zur Umsetzung des Verfahrens nach einem der Ansprüche 1 bis 3 geeignet ist, **dadurch gekennzeichnet, dass** sie mindestens einen akustischen Niederfrequenzsensor (8) umfasst, der derart ausgebildet ist, dass er die Signale erfassen kann, die vom Kneten des Teigs hervorgerufen werden, wobei Verarbeitungsmittel des von dem Sensor gesendeten Signals, die ausgebildet sind, um insbesondere diese Angabe zu erzeugen, und eine Mensch-Maschinen-Schnittstelle (12) erlauben, diese Angabe einem Bediener bereitzustellen.

5. Vorrichtung (1) nach Anspruch 4, **dadurch gekennzeichnet, dass** die Vorrichtung vom Chargenknettyp ist.

6. Vorrichtung (1) nach Anspruch 5, **dadurch gekennzeichnet, dass** die Vorrichtung eine Schüssel (5), mindestens ein Mischwerkzeug (4), das sich in der Schüssel (5) erstreckt, und mindestens eine Schüsselschwenkachse (6) umfasst, wobei der Sensor (8) auf der Schüsselschwenkachse (6) befestigt ist.

7. Vorrichtung (1) nach Anspruch 4, **dadurch gekennzeichnet, dass** sie vom kontinuierlichen Knettyp ist.

8. Vorrichtung nach einem der Ansprüche 4 bis 7, **dadurch gekennzeichnet, dass** sie eine Vielzahl akustischer Niederfrequenzsensoren umfasst, die auf geeignete Weise in der Knetzone verteilt sind.

## Claims

1. A method for mixing a dough, in particular a bakery preparation, **characterized in that** the low-frequency acoustic signals caused by mixing of the dough are sensed, **in that** those signals are processed so as to obtain data whereof the evolution over time represents the progression of the mixing, and **in that** the mixing conditions or the composition of the dough are modified when that data meets predetermined criteria.

2. The method according to claim 1, **characterized in that** said processing is done by determining the acquisition duration of said signal, and choosing, for said data, the maximum reached by that signal during that duration.

3. The method according to claim 2, **characterized in that** approximately two seconds are chosen for the acquisition duration.

4. A device (1) for mixing a dough suitable for carrying out the method according to any one of claims 1 to 3, **characterized in that** it comprises at least one low-frequency acoustic sensor (8) arranged so as to be able to sense the signals caused by the mixing of the dough, means for processing the signal emitted by said sensor suitable in particular for creating said data, and a man-machine interface (12) making it possible to retrieve that data for an operator.

5. The device (1) according to claim 4, **characterized in that** said device is of the batch mixing type.

6. The device (1) according to claim 5, **characterized in that** said device comprises a vat (5), at least one mixing tool (4) extending into said vat (5) and at least one vat pivot (6), said sensor (8) being fastened on said vat pivot (6).

7. The device according to claim 4, **characterized in that** it is of the continuous mixing type.

8. The device according to any one of claims 4 to 7, **characterized in that** it comprises a plurality of low-frequency acoustic sensors distributed suitably in the mixing area.
